# EUROPEAN PATENT APPLICATION

(11) **EP 4 620 998 A1**
(43) Date of publication of application: **24.09.2025**
(21) Application number: 25163753.4
(22) Date of filing: 14.03.2025
(51) Int. Cl.: C08J 3/22, B29B 7/74, C08K 3/04, C08K 3/36

(54) **RUBBER COMPOSITION COMPRISING MASTERBATCH**

(30) Priority: 22.03.2024 US 202463568900 P
(71) Applicant: The Goodyear Tire & Rubber Company, Akron, OH 44316 (US)
(72) Inventor: GOLDBERG, Matthew Adam, Munroe Falls, 44262 (US); SCHMIDT, Ryan Michael, Wadsworth, 44281 (US); DENT, Peter Isaac, Akron, Ohio, 44312 (US); MORIKAWA, Hideo, Tatsuno, Hyogo, 679-4124 (JP)
(74) Representative: Kutsch, Bernd

(57) **Abstract**

A process for preparing a rubber composition based on at least one diene elastomer, a filler comprising at least carbon black and an inorganic filler with an inorganic filler content of less than or equal to 50 parts by weight per hundred parts of elastomer, and a crosslinking system is disclosed. The process comprises preparing a first masterbatch of diene elastomer and of carbon black; drying a coagulum obtained; and incorporating the inorganic filler and the other constituents of the composition.

## Description

### FIELD OF THE INVENTION

The invention relates to a rubber composition based on at least one diene elastomer, a filler comprising at least carbon black and an inorganic filler, in particular silica. With this composition, a very good dispersion of the filler in the elastomeric matrix can be achieved.

The invention relates more particularly to the preparation of such a composition based on at least one masterbatch comprising the diene elastomer and the carbon black, said masterbatch itself having a very good dispersion of the carbon black in the elastomeric matrix.

The term "masterbatch" is understood to mean: an elastomer-based composite into which a filler and optionally other additives have been introduced.

The present invention relates in particular to the use of such a masterbatch for the manufacture of diene rubber compositions reinforced with a blend of organic filler and inorganic filler, which are intended for the manufacture of tires or of semi-finished products for tires, in particular treads for these tires.

### DESCRIPTION OF RELATED ART

It is known that in order to obtain the optimum reinforcing properties and hysteresis properties imparted by a filler to a tire tread, and thus to obtain high wear resistance and low rolling resistance, it is generally advisable for this filler to be present in the elastomeric matrix in a final form that is both as finely divided as possible and as uniformly distributed as possible. However, such conditions can be achieved only if this filler has a very good capacity, on the one hand, to be incorporated into the matrix during the mixing with the elastomer and to deagglomerate, and, on the other hand, to disperse uniformly in this matrix.

This has been made possible in particular by virtue of the use of novel rubber compositions reinforced at least partially with inorganic fillers, in particular silicas, that are capable of rivaling from the reinforcing standpoint a conventional tire-grade carbon black.

However, for reciprocal affinity reasons, these inorganic filler particles have an annoying tendency to clump together in the elastomeric matrix. These interactions have the deleterious consequence of limiting the dispersion of the filler and therefore the reinforcing properties to a level substantially below that which it would be theoretically possible to achieve if all the (inorganic filler/elastomer) bonds capable of being created during the compounding operation were actually obtained. These interactions moreover tend to increase the viscosity in the uncured state of the rubber compositions and therefore to make them more difficult to process than when carbon black is present, even for highly dispersible silicas.

There are various methods for obtaining a masterbatch of diene elastomer and reinforcing filler. In particular, one type of solution consists, in order to improve the dispersiblity of the filler in the elastomeric matrix, in compounding the elastomer and the filler in the "liquid" phase. To do so, the process involves an elastomer in latex form, which is in the form of water-dispersed elastomer particles, and an aqueous dispersion of the filler, that is to say a filler dispersed in water, commonly referred to as a "slurry". Certain processes in particular, such as those described in U.S. Pat. No. 6,048,923, make it possible to obtain a masterbatch of elastomer and filler that has a very good dispersion of the filler in the elastomeric matrix, greatly improved compared to the dispersion of the filler in the elastomeric matrix capable of being obtained during the solid-phase compounding of elastomer and reinforcing filler. This process consists in particular in incorporating a continuous flow of a first fluid consisting of an elastomer latex into the compounding zone of a coagulation reactor, in incorporating a second continuous flow of a second fluid consisting of an aqueous dispersion of filler under pressure into the compounding zone to form a mixture with the elastomer latex, the compounding of these two fluids being sufficiently energetic to make it possible to almost completely coagulate the elastomer latex with the filler before the outlet orifice of the coagulation reactor, and then in drying the coagulum obtained.

This process is particularly suitable for producing a masterbatch that has a very good dispersion, starting from a natural rubber latex and carbon black. Indeed, the application of this process is rendered particularly favourable by the ability that the natural rubber latex and carbon black have to coagulate together spontaneously. However, such a process is limited to the content of carbon black present in the masterbatch. An approach is desired which adjusts the overall filler content in a rubber composition comprising the carbon black masterbatch but without impacting processability.

### SUMMARY OF THE INVENTION

The invention relates to a process in accordance with claim 1, to a rubber composition in accordance with claim 12, and to an article of manufacture in accordance with claim 13.

Dependent claims refer to preferred embodiments of the invention.

Contrary to the effect of the addition of carbon black in solid form and contrary to the knowledge of those skilled in the art regarding the difficulties in dispersing and processing silica in an elastomeric matrix, the incorporation of silica into a diene elastomer and carbon black masterbatch that has a very good dispersion of the carbon black in the diene elastomer matrix, especially masterbatches prepared according to the aforementioned process, makes it possible to obtain, after introduction of silica in solid form, novel masterbatches having improved hysteresis while retaining a very good dispersion of all of the filler in the elastomeric matrix.

In a preferred aspect of the invention, the rubber composition is based on at least one diene elastomer, a filler comprising at least carbon black and an inorganic filler with an inorganic filler content of less than or equal to 50 parts by weight per hundred parts of elastomer, phr, and also a crosslinking system, characterized in that the dispersion of the filler in the elastomeric matrix has a Z value of greater than or equal to 60 and, more preferably, 80.

Preferably, this composition is obtained from a first masterbatch comprising at least the diene elastomer and the carbon black, and having a dispersion of the carbon black in the elastomeric matrix that has a Z value of greater than or equal 60 and, more preferably, to 90, and more preferably still this first masterbatch is obtained by liquid-phase compounding starting from a diene elastomer latex and an aqueous dispersion of carbon black.

In a preferred aspect of the invention, a first masterbatch is obtained according to the following process steps: feeding a continuous flow of a diene elastomer latex to a mixing zone of a coagulation reactor defining an elongate coagulation zone extending between the mixing zone and an outlet, feeding a continuous flow of a fluid comprising a filler under pressure to the mixing zone of a coagulation reactor to form a coagulated mixture, drying the coagulum obtained above in order to recover the first masterbatch.

In a preferred aspect of the invention, the diene elastomer of the composition is selected from the group consisting of polybutadienes, natural rubber, synthetic polyisoprenes, butadiene copolymers, isoprene copolymers and blends of these elastomers, and more preferably still the diene elastomer is a natural rubber.

In a preferred aspect of the invention, the inorganic filler of the composition is a silica or a chemically treated silica.

In a further preferred aspect of the invention, a process is disclosed for preparing a composition comprising at least one diene elastomer and a filler comprising at least one carbon black and an inorganic filler with an inorganic filler content of less than or equal to 50 parts by weight per hundred parts of elastomer, and also a crosslinking system, which comprises the following steps: preparing a first masterbatch of diene elastomer and of carbon black, comprising feeding a continuous flow of a diene elastomer latex to a mixing zone of a coagulation reactor defining an elongate coagulation zone extending between the mixing zone and an outlet, and feeding a continuous flow of a fluid comprising a filler comprising carbon black under pressure to the mixing zone of a coagulation reactor to form a coagulated mixture; drying the coagulum obtained above in order to recover the first masterbatch; incorporating the inorganic filler, and the other constituents of the composition, with the exception of a crosslinking system, into the first masterbatch obtained above, in a mixer by thermomechanically kneading everything until a maximum temperature of between 130°C and 200°C is reached, to produce a nonproductive compound; cooling the combined mixture to a temperature below 100° C before incorporating the crosslinking system; and subsequently incorporating the crosslinking system and additional diene elastomer into the non-productive compound and kneading everything up to a maximum temperature below 120° C, wherein the additional diene elastomer being the same or different from the at least one diene elastomer. In other words, additional elastomer is added to the productive pass according to one embodiment.

In a preferred aspect of the invention, the additional diene elastomer is incorporated into the compound in an amount that lowers the carbon black in the masterbatch to a predetermined level in the rubber composition.

In a further preferred aspect of the invention, a process is disclosed for preparing a composition comprising at least one diene elastomer and a filler comprising at least one carbon black and an inorganic filler with an inorganic filler content of less than or equal to 50 parts by weight per hundred parts of elastomer, and also a crosslinking system, which comprises the following steps: preparing a first masterbatch of diene elastomer and of carbon black, comprising: feeding a continuous flow of a diene elastomer latex to a mixing zone of a coagulation reactor defining an elongate coagulation zone extending between the mixing zone and an outlet, and feeding a continuous flow of a fluid comprising a filler comprising carbon black under pressure to the mixing zone of a coagulation reactor to form a coagulated mixture; drying the coagulum obtained above in order to recover the first masterbatch; incorporating the inorganic filler, and the other constituents of the composition, with the exception of a crosslinking system, into the first masterbatch obtained above, in a mixer by thermomechanically kneading everything until a maximum temperature of between 130°C and 200°C is reached, to produce a first nonproductive compound; cooling the first nonproductive compound to a temperature below 100 °C; incorporating at least one additional constituent of the composition into the first non-productive compound to produce at least a second non-productive compound; and cooling the combined mixture to a temperature below 100°C, subsequently incorporating all or part of the crosslinking system into the at least second non-productive compound and kneading everything up to a maximum temperature below 120°C

In a preferred aspect of the invention, the additional constituent is additional diene elastomer, which can be the same or different from the at least one diene elastomer. In another embodiment, the additional constituent is part of the crosslinking system. In another embodiment, the additional constituent is not part of the crosslinking system or additional elastomer but is rather an additive such as an antiozonant, a wax or an oil.

In a further preferred aspect of the invention, a process is disclosed for preparing a composition comprising at least one diene elastomer and a filler comprising at least one carbon black and an inorganic filler with an inorganic filler content of less than or equal to 50 parts by weight per hundred parts of elastomer, and also a crosslinking system, which comprises the following steps: preparing a first masterbatch of diene elastomer and of carbon black, comprising: preparing a first masterbatch of diene elastomer and of carbon black, comprising: feeding a continuous flow of a diene elastomer latex to a mixing zone of a coagulation reactor defining an elongate coagulation zone extending between the mixing zone and an outlet, and feeding a continuous flow of a fluid comprising a filler comprising carbon black under pressure to the mixing zone of a coagulation reactor to form a coagulated mixture; drying the coagulum obtained above in order to recover the first masterbatch; incorporating the inorganic filler, and the other constituents of the composition, part of a crosslinking system, into the first masterbatch obtained above, in a mixer by thermomechanically kneading everything until a maximum temperature of between 130°C and 200°C is reached, to produce a nonproductive compound; cooling the combined mixture to a temperature below 100°C, and subsequently incorporating a remainder of the crosslinking system into the non-productive compound and kneading everything up to a maximum temperature below 120°C.

In a preferred aspect of the invention, the diene elastomer is a natural rubber and the inorganic filler is a silica or a silica-covered carbon black.

In a preferred aspect of the invention, the content of carbon black in the masterbatch is between 1 and 100 phr, preferably 3 phr to 50 phr, and the content of inorganic filler is between 0.25 phr and 50 phr, preferably 5 to 50 phr or 25 phr to 50 phr.

In a preferred embodiment, the composition may be incorporated in the carcass, part of the belt structure and/or tread. For example, as part of the carcass, the component may be the apex, wirecoat, ply coat, squeegee compounds, gum strips, chafer, reinforcing sidewall inserts or exposed sidewall. As part of the tread section, the component may be the tread base or tread cap. The composition may also be the innerliner.

Another subject of the invention is a finished or semi-finished article, a tire tread, a tire component or a semi-finished product comprising a composition as described previously or a masterbatch as described previously.

### DETAILED DESCRIPTION OF PREFERRED EMBODIMENTS

The invention relates to a composition based on a masterbatch of diene elastomer and of reinforcing filler which comprises at least one diene elastomer and a filler comprising at least carbon black and an inorganic filler with an inorganic filler content of less than or equal to 50 parts by weight per hundred parts of elastomer, and that has a dispersion of the filler in the elastomeric matrix that has a Z value of greater than or equal 60 and, more preferably, to 80, and more preferably a Z value of greater than or equal to 90.

As is known, the dispersion of filler in an elastomeric matrix can be represented by the Z value, which is measured, after crosslinking, according to the method described by S. Otto et al. in Kautschuk Gummi Kunststoffe, 58th edition, NR 7-8/2005, in agreement with the standard ISO 11345.

The calculation of the Z value is based on the percentage of surface area in which the filler is not dispersed ("% undispersed surface area"), as measured by the "disperGRADER+" machine provided with its operating process and its "disperDATA" operating software by Dynisco, according to the equation: Z=100-(% undispersed surface area)/0.35

The percentage of undispersed surface area is, itself, measured by a camera that observes the surface area of the sample under incident light at 30°. The light points are associated with the filler and agglomerates, whilst the dark points are associated with the rubber matrix; digital processing converts the image into a black and white image, and enables the determination of the percentage of undispersed surface area, as described by S. Otto in the aforementioned document.

According to one embodiment of the invention, this composition is obtained by addition of inorganic filler to a first masterbatch comprising at least the diene elastomer and the carbon black, and having a dispersion of the carbon black in the elastomeric matrix that has a Z value of greater than or equal to 60 and, more preferably, 90.

In the present description, unless expressly indicated otherwise, all the percentages (%) shown are % by weight. Furthermore, any range of values denoted by the expression "between a and b" represents the field of values ranging from more than a to less than b (that is to say limits a and b excluded) whereas any range of values denoted by the expression "from a to b" means the field of values ranging from a up to b (that is to say including the strict limits a and b).

### I. Diene Elastomer

As is customary, the terms "elastomer" and "rubber", which are interchangeable, are used without distinction in the text.

In practice, various conjugated diene-based elastomers may be used for the rubber composition such as, for example, polymers and copolymers of at least one of isoprene and 1,3-butadiene and of styrene copolymerized with at least one of isoprene and 1,3-butadiene, and mixtures thereof.

Representative of such conjugated diene-based elastomers are, for example, comprised of at least one of cis 1,4-polyisoprene (natural and synthetic), cis 1,4-polybutadiene, styrene/butadiene copolymers (aqueous emulsion polymerization prepared and organic solvent solution polymerization prepared), medium vinyl polybutadiene having a vinyl 1,2-content in a range of 10 to 90 percent, isoprene/butadiene copolymers, styrene/isoprene/butadiene terpolymers.

Representative synthetic polymers are the homopolymerization products of butadiene and its homologues and derivatives, for example, methyl butadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile, which polymerize with butadiene to form NBR, methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether.

Specific examples of synthetic rubbers include neoprene (polychloroprene), polybutadiene (including cis-1,4-polybutadiene), polyisoprene (including cis-1,4polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers.

In practice, the preferred rubber or elastomers are polyisoprene (natural or synthetic), polybutadiene and SBR.

In one preferred embodiment, one elastomer is an SBR and, more preferably, a solution-polymerized SBR (SSBR). The SSBR can be conveniently prepared, for example, by organo lithium catalyzation in the presence of an organic hydrocarbon solvent.

In one preferred embodiment, at least one elastomer is functionalized to react with a silica filler. Representative of functionalized elastomers are, for example, styrene/butadiene elastomers containing one or more functional groups comprised of:
(A) amine functional group reactive with hydroxyl groups on precipitated silica,
(B) siloxy functional group, including end chain siloxy groups, reactive with hydroxyl groups on precipitated silica,
(C) combination of amine and siloxy functional groups reactive with hydroxyl groups on said precipitated silica,
(D) combination of thiol and siloxy (e.g. ethoxysilane) functional groups reactive with hydroxyl groups on the precipitated silica,
(E) combination of imine and siloxy functional groups reactive with hydroxyl groups on the precipitated silica,
(F) hydroxyl functional groups reactive with the precipitated silica.

For the functionalized elastomers, representatives of amine functionalized SBR elastomers are, for example, in-chain functionalized SBR elastomers mentioned in U.S. Pat. No. 6,936,669.

Representative of a combination of amino-siloxy functionalized SBR elastomers with one or more amino-siloxy groups connected to the elastomer is, for example, HPR355^{™} from JSR and amino-siloxy functionalized SBR elastomers mentioned in U.S. Pat. No. 7,981,966.

Representative styrene/butadiene elastomers end functionalized with a silane-sulfide group are, for example, mentioned in U.S. Pat. Nos. 8,217,103 and 8,569,409.

Organic solvent polymerization prepared tin coupled elastomers may also be used, such as, for example, tin coupled organic solution polymerization prepared styrene/butadiene co-polymers, isoprene/butadiene copolymers, styrene/isoprene copolymers, polybutadiene and styrene/isoprene/butadiene terpolymers including the aforesaid functionalized styrene/butadiene elastomers.

Tin coupled copolymers of styrene/butadiene may be prepared, for example, by introducing a tin coupling agent during the styrene/1,3-butadiene monomer copolymerization reaction in an organic solvent solution, usually at or near the end of the polymerization reaction. Such coupling of styrene/butadiene copolymers is well known to those having skill in such art.

In practice, it is usually preferred that at least 50 percent and more generally in a range of 60 to 85 percent of the Sn (tin) bonds in the tin coupled elastomers are bonded to butadiene units of the styrene/butadiene copolymer to create Sn-dienyl bonds such as butadienyl bonds.

Creation of tin-dienyl bonds can be accomplished in a number of ways such as, for example, sequential addition of butadiene to the copolymerization system or use of modifiers to alter the styrene and/or butadiene reactivity ratios for the copolymerization. It is believed that such techniques, whether used with a batch or a continuous copolymerization system, is well known to those having skill in such art.

Various tin compounds, particularly organo tin compounds, may be used for the coupling of the elastomer. Representative of such compounds are, for example, alkyl tin trichloride, dialkyl tin dichloride, yielding variants of a tin coupled styrene/butadiene copolymer elastomer, although a trialkyl tin monochloride might be used which would yield simply a tin-terminated copolymer.

Examples of tin-modified, or coupled, styrene/butadiene copolymer elastomers might be found, for example, in U.S. Pat. No. 5,064,901.

Emulsion polymerization prepared styrene/butadiene/acrylonitrile copolymer rubbers containing 2 to 40 weight percent bound acrylonitrile in the copolymer are also contemplated as diene-based rubbers for use in this invention.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

It is further contemplated that, in certain embodiments, the rubber elastomer may be a butyl type rubber, particularly copolymers of isobutylene with a minor content of diene hydrocarbon(s), such as, for example, isoprene and halogenated butyl rubber.

These diene elastomers can be classified into two categories: "essentially unsaturated" or "essentially saturated". Generally, the expression "essentially unsaturated" is understood to mean a diene elastomer resulting at least in part from conjugated diene monomers having a content of units of diene origin (conjugated dienes) which is greater than 15% (mol %); thus it is that diene elastomers such as butyl rubbers or diene/α-olefin copolymers of the EPDM type do not fall under the preceding definition and may especially be described as "essentially saturated" diene elastomers (low or very low content of units of diene origin, always less than 15%). In the category of "essentially unsaturated" diene elastomers, the expression "highly unsaturated" diene elastomer is understood to mean in particular a diene elastomer having a content of units of diene origin (conjugated dienes) which is greater than 50%.

To summarize, the synthetic diene elastomer or elastomers according to the invention are preferably selected from the group of highly unsaturated diene elastomers formed by polybutadienes (abbreviated to "BR"), synthetic polyisoprenes (IR), butadiene copolymers, isoprene copolymers, and blends of these elastomers. Such copolymers are more preferably selected from the group consisting of butadiene/styrene copolymers (SBR), isoprene/butadiene copolymers (BM), isoprene/styrene copolymers (SIR) and isoprene/butadiene/styrene copolymers (SBIR).

As was specified above, liquid-phase compounding processes are preferably used to make it possible to obtain masterbatches based on diene elastomer and on carbon black that have a very good dispersion of the carbon black in the elastomer. Thus, especially for the production of the first masterbatch of diene elastomer and carbon black, use will more particularly be made of a diene elastomer latex, the diene elastomer latex being a particular form of the elastomer that is in the form of water-dispersed elastomer particles.

The invention therefore preferably relates to latices of diene elastomers, the diene elastomers being those defined above.

More particularly, for natural rubber (NR) which is particularly suitable for the invention, this natural rubber exists in various forms as explained in detail in Chapter 3 "Latex concentrates: properties and composition" by K. F. Gaseley, A. D. T. Gordon and T. D. Pendle in "Natural Rubber Science and Technology", A. D. Roberts, Oxford University Press-1988.

In particular, several forms of natural rubber latex are sold: the natural rubber latices referred to as "field latices", the natural rubber latices referred to as "concentrated natural rubber latices", epoxidized latices (ENR), deproteinized latices or else prevulcanized latices. The natural rubber field latex is a latex in which ammonia has been added to prevent premature coagulation and the concentrated natural rubber latex corresponds to a field latex that has undergone a treatment corresponding to a washing followed by a further concentration. The various categories of concentrated natural rubber latices are listed in particular according to the standard ASTM D 1076-06. Distinguished in particular from among these concentrated natural rubber latices are the concentrated natural rubber latices of quality referred to as: "HA" (high ammonia) and of quality referred to as "LA"; for the invention, use will advantageously be made of concentrated natural rubber latices of HA quality.

The NR latex may be physically or chemically modified beforehand (centrifugation, enzyme treatment, chemical modifier, etc.).

The latex may be used directly or may be first diluted in water to facilitate the processing thereof.

Thus, as synthetic elastomer latex, the latex may in particular consist of a synthetic diene elastomer already available in the form of an emulsion (for example a butadiene/styrene copolymer, SBR, prepared in emulsion), or of a synthetic diene elastomer initially in solution (for example an SBR prepared in solution) which is emulsified in a mixture of organic solvent and water, generally by means of a surfactant.

An SBR latex, especially an SBR prepared in emulsion ("ESBR") or an SBR prepared in solution ("SSBR"), and more particularly an SBR prepared in emulsion, is particularly suitable for the invention.

There are two main types of processes for the copolymerization, in emulsion, of styrene and butadiene, one of them, or the hot process (carried out at a temperature close to 50°C), being suitable for the preparation of highly branched SBRs whereas the other, or the cold process (carried out at a temperature which may range from 15°C to 40°C), makes it possible to obtain more linear SBRs.

For a detailed description of the effectiveness of several emulsifiers that can be used in said hot process (as a function of the contents of said emulsifiers), reference may for example be made to the two articles by C. W. Carr, I. M. Kolthoff, E. J. Meehan, University of Minnesota, Minneapolis, Minn., which appeared in the Journal of Polymer Science of 1950, Vol. V, No. 2, pp. 201-206, and of 1951, Vol. VI, No. 1, pp. 73-81.

Regarding comparative examples of the implementation of said cold process, reference may for example be made to the article 1/2 Industrial and Engineering Chemistry, 1948, Vol. 40, No. 5, pp. 932-937, E. J. Vandenberg, G. E. Hulse, Hercules Powder Company, Wilmington, Del.+ and to the article 1/2 Industrial and Engineering Chemistry, 1954, Vol. 46, No. 5, pp. 1065-1073, J. R. Miller, H. E. Diem, B. F. Goodrich Chemical Co., Akron, Ohio.

In the case of an SBR elastomer (ESBR or SSBR), use is especially made of an SBR having an average styrene content, for example of between 20% and 35% by weight, or a high styrene content, for example from 35% to 45%, a content of vinyl bonds of the butadiene part of between 10% and 70%, a content (mol %) of trans-1,4-bonds of between 15% and 75% and a Tg of between -10°C and -55°C; such an SBR may advantageously be used as a blend with a BR that preferably has more than 90% (mol %) of cis-1,4-bonds.

It will be noted that it is possible to envisage using one or more natural rubber latices as a blend, one or more synthetic rubber latices as a blend, or a blend of one or more natural rubber latices with one or more synthetic rubber latices.

### II. Fillers

All carbon blacks, in particular blacks of the HAF, ISAF or SAF type, conventionally used in tires ("tire-grade" blacks) are suitable as carbon blacks. Mention will more particularly be made, among the latter, of the reinforcing carbon blacks of the 100, 200 or 300 series (ASTM grades), such as, for example, the N110, N121, N134, N220, N231, N234, N242, N293, N299, S315, N326, N330, M332, N339, N343, N347, N351, N358, or N375, blacks, or else, depending on the applications targeted, the blacks of higher series (for example, N400, N539, N550, N582, N630, N642, N650, N683, N754, N762, N765, N774, N787, N907, N908, N990 and N991).

Also suitable are mass balanced or ISCC carbon black, such as a carbon black at least partially derived from a non-traditional feedstock, such as tall oil, methane, or end-of-life tire oil. The ASTM-D6866 method determine a ratio of the amount of radiocarbon (¹⁴C) in an unknown sample to that of a modern reference standard. The ratio is reported as a percentage with the units "pMC" (percent modern carbon). If the material being analyzed is a mixture of present-day radiocarbon and fossil carbon (fossil carbon being derived from petroleum, coal or a natural gas source), then the obtained pMC value correlates directly to the amount of biomass material present in the sample. The results provided by the ASTM D6866 is the amount of bio-based component "present" in the material-not the amount of bio-based material "used" in the manufacturing process. In one embodiment, the carbon black has a greater than one percent (1%) modern carbon content as defined by ASTM D6866. The carbon black is produced from a bio-based feedstock prior to its addition to the master batch and/or rubber composition. In one embodiment, the carbon black is at least partially derived from a bio-based feedstock and, in a preferred embodiment, is completely devoid of fossil carbon.

Also suitable as carbon black are the carbon blacks partially or completely covered with silica via a post-treatment, or the carbon blacks modified in situ by silica such as the fillers sold by Cabot Corporation under the name Ecoblack^{™} "CRX 2000" or "CRX4000".

Various combinations of carbon blacks (of differing particle sizes and/or other properties, including conventional, petroleum-carbon black and bio-derived carbon black) can also be employed in the disclosed rubber composition. Representative examples of rubber reinforcing carbon blacks are, for example, and not intended to be limiting, referenced in The Vanderbilt Rubber Handbook, 13th edition, 1990, on pages 417 and 418 with their ASTM designations. Such rubber reinforcing carbon blacks may have iodine absorptions ranging from, for example, 9 to 240 g/kg and DBP values ranging from 34 to 150 cc/100 g.

The expression "inorganic filler" should be understood here, in a known manner, to mean any inorganic or mineral filler, whatever its color and its origin (natural or synthetic), also referred to as "white filler", "clear filler" or even "non-black filler", in contrast to carbon black, this inorganic filler being capable of reinforcing by itself alone, without means other than an intermediate coupling agent, a rubber composition intended for the manufacture of a tread for tires, in other words capable of replacing, in its reinforcing role, a conventional tire-grade carbon black for a tread. Such a filler is generally characterized by the presence of functional groups, in particular hydroxyl (-OH) groups, at its surface, requiring, in order to be used as a reinforcing filler, the use of a coupling agent or system intended to provide a stable chemical bond between the isoprene elastomer and said filler.

Such an inorganic filler may therefore be used with a coupling agent in order to enable the reinforcement of the rubber composition in which it is included. It may also be used with a covering agent (which does not provide a bond between the filler and the elastomeric matrix) in addition to a coupling agent or not (in this case the inorganic filler does not play a reinforcing role).

The physical state in which the inorganic filler is present is not important, whether it is in the form of a powder, of microbeads, of granules, of balls or any other appropriate densified form. Of course, the expression "inorganic filler" is also understood to mean mixtures of various inorganic fillers, in particular silicas, such as conventional, precipitated, treated, and/or highly dispersible silica, and very high surface area HDS (BET nitrogen surface area > 250 m²/g) siliceous and/or aluminous fillers as described below.

Mineral fillers of the siliceous type, in particular silica (SiO₂), or of the aluminous type, in particular alumina (Al₂O₃), are suitable especially as inorganic fillers. The silica used may be any silica known to those skilled in the art, especially any precipitated or pyrogenic silica having a BET surface area and a CTAB specific surface area that are both less than 450 m²/g, preferably ranging from 30 to 400 m²/g. Mention will be made, as highly dispersible precipitated silicas ("HDSs"), for example, of the Ultrasil 7000 and Ultrasil 7005 silicas from Evonik, the Zeosil 1165 MP, 1135 MP, 1115 and 1200 MP silicas from Rhodia, the Hi-Sil EZ150G silica from PPG, the Zeopol 8715, 8745 and 8755 silicas from Huber or the silicas with a high specific surface area as described in WO 03/16837. Other contemplated fillers include Premium SW, Zeosil 115 and 125 and 200 MP from Solvay.

When the compositions of the invention are intended for tire treads having a low rolling resistance, the inorganic filler used, in particular if it is silica, preferably has a BET surface area of between 45 and 400 m²/g, more preferably of between 60 and 300 m²/g.

Preferably, the inorganic fillers for which the mean size (by weight) is between 20 and 300 nm, more preferably between 20 and 150 nm, are particularly suitable for the present invention. This mean size is conventionally measured after dispersion, by ultrasonic deagglomeration, of the filler to be analyzed in water or an aqueous solution containing a surfactant. For an inorganic filler such as silica, the measurement is carried out using an X-ray detection centrifugal sedimentometer of "XDC" ("X-ray disc centrifuge") type, sold by Brookhaven Instruments, according to the following procedure. A suspension of 3.2 g of sample of inorganic filler to be analysed in 40 ml of water is produced by the action over 8 minutes, at 60% power (60% of the maximum position of the "output control"), of a 1500 W ultrasonic probe (¾ inch Vibracell sonicator sold by Bioblock); after sonication, 15 ml of the suspension are introduced into the disc rotating at a speed that varies between 3000 and 6000 rpm (the speed being adapted as a function of the mean size of the filler: the smaller the size, the higher the speed); after sedimentation for 120 minutes, the weight distribution of the particle sizes and the mean size, by weight, of the particles dw are calculated by the software of the "XDC" sedimentometer (dw=Σ(ni di5)/Σ(ni di4) with ni being the number of objects of the size class or diameter di).

Preferably, the content of total filler (carbon black and inorganic filler such as silica) is between 1 and 200 phr, more preferably between 30 and 150 phr and more preferably still between 30 and 100 phr, the optimum being, in a known manner, different depending on the particular applications targeted: the level of reinforcement expected on a bicycle tire for example is, of course, less than that required on a tire capable of running at high speed in a sustained manner, for example a motorcycle tire, a tire for a passenger vehicle or for a utility vehicle such as a heavy duty vehicle.

According to one preferred embodiment of the invention, use is made of carbon black, the content of which varies from 1 to 100 phr and, preferably, 30 to 80 phr in the masterbatch and/or the rubber composition, and an inorganic filler, in particular silica, the content of which varies from 5 to 50 phr, more particularly the total filler of the composition comprising carbon black, the content of which varies from 35 to 70 phr and an inorganic filler, in particular silica, the content of which varies from 5 to 35 phr, more preferably still the total filler comprising carbon black, the content of which varies from 35 to 65 phr and an inorganic filler, in particular silica, the content of which varies from 1 to 30 phr.

### III. Masterbatches-Rubber Composition

Advantageously, the masterbatches and the compositions thus produced are capable of being used in tire applications.

The rubber compositions for tires based on masterbatches and inorganic filler according to the invention may also comprise, in a known manner, a coupling agent and/or a covering agent and a vulcanization system.

In one embodiment, the rubber composition may include a silane coupling agent. In one embodiment, the rubber composition may comprise a silane coupling agent in response to the reinforcement filler being silica.

The silane coupling agent may be any suitable silane coupling agent, such as bis(ω-trialkoxyalkylsilyl) polysulfide, ω-mercaptoalkyl-trialkoxysilane, or combination thereof. In one example, the bis-(ω-trialkoxysilylalkyl) polysulfide has an average of from 2 to 4 connecting sulfur atoms in its polysulfidic bridge. In another example, the bis-(ω-trialkoxysilylalkyl) polysulfide has an average of from 2 to 2.6 connecting sulfur atoms in its polysuflidic bridge. In yet another example, the bis-(ω-trialkoxysilylalkyl)polysulfide has an average of from 3.3 to 3.8 connecting sulfur atoms in its polysulfidic bridge. The alkyl group of the silylalkyl moiety of the bis-(ω-trialkoxysilylalkyl)polysulfide may be a saturated C₂-C₆ alkyl group, e.g., a propyl group. In addition, at least one of the alkyl groups of the trialkoxy moiety of the bis-(ω-trialkoxysilylalkyl)polysulfide can be an ethyl group and the remaining alkyl groups of the trialkoxy moiety can be independently saturated C₂-C₁₈ alkyls. In another example, at least two of the alkyl groups of the trialkoxy moiety of the bis-(ω-trialkoxysilylalkyl) polysulfide are ethyl groups and the remaining alkyl group of the trialkoxy moiety is independently a saturated C₃-C₁₈ alkyl. In one example, the bis-(ω-trialkoxysilylalkyl) polysulfide coupling agent is bis-3-(triethoxysilylpropyl) tetrasulfide ("TESPD"). In another example, the bis-(ω-trialkoxysilylalkyl) Polysulfide coupling agent is bis-3-(triethoxysilylpropyl) tetrasulfide ("TESPT"). The ωmercaptoalkyltrialkoxysilane may have its mercapto moiety blocked from pre-reacting with hydroxyl groups (e.g., silanol groups) contained on the precipitated silica aggregates prior to unblocking the blocked mercapto moiety at an elevated temperature. In one example, the blocked ω-mercaptoalkyl-trialkoxysilane is NXT or NXT-LoV available from GE Silicones of Tarrytown, N.Y.

### Sulfur Curative

It may be preferred to have the rubber composition for use in the tire component to additionally contain a conventional sulfur containing organosilicon compound. Examples of suitable sulfur containing organosilicon compounds are of the formula:

Z-Alk-Sₙ-Alk-Z I

in which Z is selected from the group consisting of 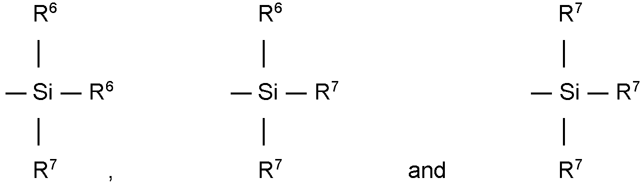 where R⁶ is an alkyl group of 1 to 4 carbon atoms, cyclohexyl or phenyl; R⁷ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore, as to formula I, preferably Z is 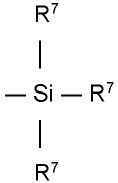 where R⁷ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT^{™} from Momentive Performance Materials.

In another embodiment, suitable sulfur containing organosilicon compounds include compounds disclosed in U.S. Publication 2006/0041063. In one embodiment, the sulfur containing organosilicon compounds include the reaction product of hydrocarbon based diol (e.g., 2-methyl-1,3-propanediol) with S-[3-(triethoxysilyl)propyl] thiooctanoate. In one embodiment, the sulfur containing organosilicon compound is NXT-Z^{™} from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

The amount of the sulfur containing organosilicon compound of formula I in a rubber composition will vary depending on the level of other additives that are used. The amount of the compound of formula I will range from 0.5 to 20 phr. Preferably, the amount will range from 1 to 10 phr.

According to some embodiments of the rubber compositions of this invention, the content of coupling agent is preferably between 0.1% and 12% by weight of the inorganic filler for a CTAB surface area of 160 m²/g, more preferably between 4% and 10% by weight of the inorganic filler for a CTAB surface area of 160 m²/g; and/or the content of covering agent is preferably between 0.1% and 20% by weight of the inorganic filler for a CTAB surface area of 160 m²/g, more preferably between 5% and 20% by weight of the inorganic filler for a CTAB surface area of 160 m²/g. It is possible for the content of coupling agent to be adjusted to the specific surface area of the filler.

A person skilled in the art will understand that a filler of another nature, in particular organic nature, might be used as filler equivalent to the inorganic filler described in the present section, provided that this filler is covered with an inorganic layer, such as silica, or else comprises, at its surface, functional sites, in particular hydroxyls, requiring the use of a coupling agent in order to form the connection between the filler and the elastomer.

### IV. Mixing

These rubber compositions in accordance with the invention may also comprise all or some of the standard additives customarily used in elastomer compositions intended for the manufacture of tires, in particular treads, such as for example plasticizers or extender oils, whether the latter are of aromatic or non-aromatic nature, pigments, protective agents such as antiozone waxes, chemical antiozonants, antioxidants, anti-fatigue agents, reinforcing resins, methylene acceptors (for example phenolic-novolac resin) or methylene donors (for example HMT or H3M) as described, for example, in application WO 02/10269, a crosslinking system based on either sulphur or on sulphur donors, and/or on a peroxide and/or on bismaleimides, and vulcanization accelerators.

In contemplated embodiments, these compositions may comprise, as preferred non-aromatic or very weakly aromatic plasticizing agent, at least one compound selected from the group consisting of naphthenic oils, paraffinic oils, MES oils, TDAE oils, glycerol esters (in particular trioleates), hydrocarbon-based plasticizing resins exhibiting a high Tg preferably above 30°C, and mixtures of such compounds.

It should be noted that it is also possible to envisage producing masterbatches in accordance with the invention by incorporating therein, especially before the drying phase of the production of the masterbatch in the liquid phase, additives as described above-oil, antioxidant, coupling agent, covering agent, etc.

### V. Manufacture of Rubber Compositions and Masterbatches

The rubber compositions of the invention are manufactured in appropriate mixers, using two successive phases of preparation according to a general procedure well known to those skilled in the art: a first phase of thermomechanical working or kneading (sometimes referred to as a "non-productive" phase) at high temperature, up to a maximum temperature of between 130°C and 200°C, preferably between 145°C and 185°C for at least one pass, followed by a second phase of mechanical working (sometimes referred to as a "productive" phase) at lower temperature, typically below 120°C, for example between 60°C and 100°C, during which finishing phase the crosslinking or vulcanization system is incorporated. Embodiments are contemplated to comprise one or more non-productive phases or passes.

According to one embodiment of the invention, all the base constituents of the compositions of the invention, with the exception of the vulcanization/crosslinking system, in particular the masterbatch comprising the carbon black and the inorganic filler, and the coupling agent where appropriate, are incorporated intimately, by kneading, into the diene elastomer during the so-called non-productive first phase, that is to say at least these various base constituents are introduced into the mixer and thermomechanically kneaded, in one or more steps, until the maximum temperature of between 130°C and 200°C, preferably between 145°C and 185° C, is reached.

According to another embodiment of the invention, all the base constituents of the compositions of the invention, including at least one constituent of the crosslinking/vulcanization system, in particular the masterbatch comprising the carbon black and the inorganic filler, and the coupling agent where appropriate, are incorporated intimately, by kneading, into the diene elastomer during the so-called non-productive first phase, that is to say at least these various base constituents are introduced into the mixer and thermomechanically kneaded, in one or more steps, until the maximum temperature of between 130°C and 200°C, preferably between 145°C and 185°C, is reached.

According to another embodiment of the invention, at least one of the base constituents of the compositions of the invention, optionally including at least one constituent of the crosslinking/vulcanization system, in particular the masterbatch comprising the carbon black and the inorganic filler, and the coupling agent where appropriate, are incorporated intimately, by kneading, into the diene elastomer during the so-called non-productive first phase. That is to say at least one base constituent is introduced into the mixer and thermomechanically kneaded, in one or more steps, until the maximum temperature of between 130°C and 200°C, preferably between 145°C and 185°C, is reached to produce a first non-productive compound or composition. At least a second base constituent of the rubber composition of the invention is incorporated into the first non-productive compound by any method known to one skilled in the art or by kneading, into the first non-productive compound during another non-productive phase (or a second non-productive phase). The at least second base constituent is introduced into the mixer and thermomechanically kneaded, in one or more steps, until the maximum temperature of between 130°C and 200°C to produce a second non-productive compound.

According to one preferred embodiment of the invention, the inorganic filler is incorporated into the diene elastomer and the carbon black which have been previously prepared in the form of a first masterbatch.

Preferably, this first masterbatch is produced in the "liquid" phase. To do so, the process involves a diene elastomer in latex form, which is in the form of water-dispersed elastomer particles, and an aqueous dispersion of the carbon black, that is to say a filler dispersed in water, commonly referred to as a "slurry". More preferably still, the process steps described in document U.S. Pat. No. 6,048,923 will be followed, which process consists in particular in incorporating a continuous flow of a first fluid consisting of the elastomer latex into the compounding zone of a coagulation reactor, in incorporating a second continuous flow of a second fluid consisting of the aqueous dispersion of carbon black under pressure into the compounding zone to form a mixture with the elastomer latex, the compounding of these two fluids being sufficiently energetic to make it possible to almost completely coagulate the elastomer latex with the carbon black before the outlet orifice of the coagulation reactor, and then in drying the coagulum obtained.

It will be noted in particular that the incorporation of the inorganic filler may be carried out at the same time as the introduction into the mixer of other constituents (especially the diene elastomer alone or in the form of a first masterbatch) but also advantageously that this incorporation may be offset in time by a few tens of seconds to a few minutes.

By way of example, the (non-productive) first phase is carried out in a single thermomechanical stage during which at least one base constituent (where appropriate in the form of a masterbatch as specified above), the optional complementary covering agents or processing aids and various other additives, optionally including constituents of the vulcanization system, are introduced into an appropriate mixer, such as a standard internal mixer. The total duration of the kneading, in this non-productive phase, is preferably between 1 and 15 min. After cooling of the mixture thus obtained during the final non-productive phase, the remaining activating constituents of the vulcanization system is then incorporated at low temperature, generally in an internal mixer; everything is then mixed (productive phase) for a few minutes, for example between 2 and 15 min. In one embodiment, an additional diene elastomer can also be incorporated into the final non-productive compound during the productive phase, which comprises the step of kneading everything up to a maximum temperature below 120°C In one embodiment, the additional diene elastomer can be the same or different from the at least one diene elastomer. In a preferred embodiment, the additional diene elastomer is used to dilute the amount of filler that was contained in the original masterbatch. Thus, the additional diene elastomer is incorporated into the compound in an amount that lowers the carbon black in the masterbatch to a predetermined level in the rubber composition. It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, fillers, pigments, fatty acid, zinc oxide, waxes, antioxidants and antiozonants and peptizing agents. The crosslinking system is preferably a vulcanization system, i.e. a system based on sulphur (or on a sulphur donor) and on a primary vulcanization accelerator. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.01 to 12 phr, in particular between 1 and 10 phr. Added to this base vulcanization system are various known secondary vulcanization accelerators or vulcanization activators, such as zinc oxide, stearic acid or equivalent compounds, or guanidine derivatives (in particular diphenylguanidine), incorporated during the non-productive first phase and/or during the productive phase, as described subsequently. As known to those skilled in the art, depending on the intended use of the sulfur vulcanizable and sulfur-vulcanized material (rubbers), the additives mentioned above are selected and commonly used in conventional amounts.

Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of fatty acids, if used, which can include stearic acid comprise 0.1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.1 to 10 phr, more preferably of between 0.5 and 5.0 phr. In another embodiment, combinations of a primary and a secondary accelerator might be used with the secondary accelerator being used in smaller amounts, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The final composition thus obtained is then calendered, for example in the form of a sheet or slab, or else extruded in the form of a rubber profiled element that can be used for example as a tire tread for a passenger vehicle or heavy vehicle.

## Claims

1. A process for preparing a rubber composition based on at least one diene elastomer, a filler comprising at least carbon black and an inorganic filler with an inorganic filler content of less than or equal to 50 parts by weight per hundred parts of elastomer, and a crosslinking system, the process comprising:
preparing a first masterbatch of diene elastomer and of carbon black comprising: feeding a continuous flow of a diene elastomer latex to a mixing zone of a coagulation reactor defining an elongate coagulation zone extending between the mixing zone and an outlet, and feeding a continuous flow of a fluid comprising a filler comprising carbon black under pressure to the mixing zone of a coagulation reactor to form a coagulated mixture;
drying the coagulum obtained above in order to recover the first masterbatch; and
(A) incorporating the inorganic filler and the other constituents of the composition, with the exception of a crosslinking system, into the first masterbatch obtained above, in a mixer by thermomechanically kneading everything until a maximum temperature of between 130°C and 200°C is reached, to produce a nonproductive compound;
cooling the combined mixture to a temperature below 100°C before incorporating the crosslinking system; and
subsequently incorporating the crosslinking system and additional diene elastomer into the non-productive compound and kneading everything up to a maximum temperature below 120° C, the additional diene elastomer being the same or different from the at least one diene elastomer; or
(B) incorporating the inorganic filler and the other constituents of the composition, with the exception of a crosslinking system, into the first masterbatch obtained above, in a mixer by thermomechanically kneading everything until a maximum temperature of between 130°C and 200°C is reached, to produce a first nonproductive compound;
cooling the first nonproductive compound to a temperature below 100°C;
incorporating at least one additional constituent of the composition into the first non-productive compound to produce at least a second non-productive compound;
cooling the combined mixture to a temperature below 100°C; and
subsequently incorporating all or part of the crosslinking system into the at least second non-productive compound and kneading everything up to a maximum temperature below 120°C; or
(C) incorporating the inorganic filler, the other constituents of the composition and a part of a crosslinking system into the first masterbatch obtained above, in a mixer by thermomechanically kneading everything until a maximum temperature of between 130°C and 200°C is reached, to produce a nonproductive compound;
cooling the combined mixture to a temperature below 100°C; and
subsequently incorporating a remainder of the crosslinking system into the non-productive compound and kneading everything up to a maximum temperature below 120°C.

2. The process of claim 1 wherein the additional diene elastomer is incorporated into the non-productive compound or into the into the first non-productive compound in an amount that lowers the carbon black in the masterbatch to a predetermined level in the rubber composition.

3. The process of claim 1 or 2, wherein the at least one additional constituent is additional diene elastomer, the additional diene elastomer being the same or different from the at least one diene elastomer.

4. The process of at least one of the previous claims, wherein the at least one additional constituent is part of the crosslinking system, the at least one additional constituent being selected from the group consisting of: sulfur, sulfur donor, accelerator, and vulcanization activator.

5. The process of at least one of the previous claims, wherein the diene elastomer is selected from the group consisting of polybutadienes, natural rubber, synthetic polyisoprenes, butadiene copolymers, isoprene copolymers, and blends of these elastomers.

6. The process of at least one of the previous claims, wherein the inorganic filler is a silica or a silica covered carbon black.

7. The process of at least one of the previous claims, wherein the content of carbon black in the masterbatch is between 30 and 80 phr, and the content of inorganic filler is between 5 and 50 phr.

8. The process of at least one of the previous claims, wherein the process in conducted in accordance with the alternative specified in section (A) of claim 1.

9. The process of at least one of the previous claims 1 to 7, wherein the process in conducted in accordance with the alternative specified in section (B) of claim 1.

10. The process of at least one of the previous claims 1 to 7, wherein the process in conducted in accordance with the alternative specified in section (C) of claim 1.

11. The process of at least one of the previous claims, wherein the dispersion of the filler in the elastomeric matrix has a Z value of greater than or equal to 60, preferably at least 80 or at least 90.

12. A rubber composition prepared by the process in accordance with at least one of the previous claims wherein the dispersion of the filler in the elastomeric matrix has a Z value of greater than or equal to 60, preferably at least 80 or at least 90.

13. An article of manufacture comprising the rubber composition of claim 12.

14. The article of manufacture of claim 13 wherein the article is a tire tread, a tire component, or a cured or uncured tire.
